# EUROPÄISCHE PATENTSCHRIFT

(11) **EP 3 012 929 B1**
(45) Veröffentlichungstag und Bekanntmachung des Hinweises auf die Patenterteilung: **13.06.2018**
(21) Anmeldenummer: 14190384.9
(22) Anmeldetag: 25.10.2014
(51) Int. Cl.: H02G 3/04

(54) **KABELFÜHRUNGSVORRICHTUNG MIT FUNKTIONSERHALT IM BRANDFALL**
FIRE-DAMAGE RESISTANT CABLE GUIDE DEVICE
DISPOSITIF DE GUIDAGE DE CÂBLE DOTÉ D'UN FONCTIONNEMENT CONTINU EN CAS D'INCENDIE

(43) Veröffentlichungstag der Anmeldung: 27.04.2016
(73) Patentinhaber: Zurecon AG, 9053 Teufen AR (CH)
(72) Erfinder: Pfluger, Gerd, 4625 Oberbuchsiten (CH)
(74) Vertreter: Rutz & Partner

(56) Entgegenhaltungen:
- EP-A1- 2 081 268
- EP-A2- 0 063 336
- DE-A1- 3 445 329
- FR-A1- 2 852 156
- US-A- 1 217 398
- US-A1- 2004 065 459

## Beschreibung

Die Erfindung betrifft eine Kabelführungsvorrichtung mit Funktionserhalt im Brandfall.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender Eigenstabilität in Kabelkanäle von Kabelführungsvorrichtungen gelegt und so beispielsweise von einem Schaltfeld oder einer Zentrale zu den Verbrauchern geführt. Die Kabelführungsvorrichtung umfasst dabei nebst dem Kabelkanal Montagevorrichtungen, mittels denen der Kabelkanal an der Betondecke montierbar ist. Kabelführungsvorrichtungen und Kabelkanäle dieser Art sind beispielsweise aus [1], Produktkatalog der LANZ OENSINGEN AG, Oktober 2013, bekannt. Kabelkanäle sind dabei in der Ausgestaltung von Gitterbahnen, die Längs- und Querstege aufweisen (siehe Seite 22), aus Blech geformten Kabelbahnen bzw. Kabelrinnen (siehe Seite 34) oder Kabelpritschen lieferbar, die zwei durch Traversen miteinander verbundene Kanalwände aufweisen (siehe Seite 54).

Die Montagevorrichtungen umfassen üblicherweise eine Deckenstütze und wenigstens einen daran befestigten Ausleger, auf den der Kabelkanal abgelegt werden kann. Die Deckenstütze wird normalerweise mittels wenigstens eines Segmentankers oder Dübels an einer Gebäudedecke montiert.

Durch die Medienversorgung über Kabelkanäle und darin installierte Kabel wird dafür gesorgt, dass alle angeschlossenen Geräte, insbesondere auch alle Geräte und Vorrichtungen der Gebäudetechnik und der Sicherheitstechnik, wie Aufzüge, Klimatechnik, Beleuchtung, Alarmsysteme, Brandmeldeanlagen, etc. deren Funktionen erfüllen können.

Anlagen müssen insbesondere im Brandfall zwingend funktionieren, um Notfallmassnahmen und Evakuierungen ungehindert ausführen zu können. Bis zum Abschluss dieser Massnahmen sollen die Energieversorgung über die Kabelkanäle und die Funktionen der genannten Geräte und Vorrichtungen erhalten bleiben. Insbesondere in öffentlichen Gebäuden, Spitälern, Einkaufszentren, Schulen, Hotels und Industrieanlagen werden daher Kabelkanäle und Kabel eingesetzt, die für den Funktionserhalt im Brandfall ausgelegt sind.

In der DIN 4102 wird der Funktionserhalt von Kabelkanälen in Klassen unterteilt. Die Klassenbezeichnung richtet sich wie folgt nach der Dauer innerhalb der der Funktionserhalt gewährleistet ist:
E30 - Funktionserhalt von 30 Minuten
E60 - Funktionserhalt von 60 Minuten
E90 - Funktionserhalt von 90 Minuten

Kabel und Leitungen, die für den Funktionserhalt im Brandfall eingesetzt werden, weisen ein Brennverhalten nach IEC 60332-1 (flammwidrig) oder IEC 60332-3 (hoch flammwidrig) auf. Ein Hersteller solcher Kabel ist beispielsweise LAPP engineering, CH-6330 Cham.

Diese Kabel werden nach den Normen BS6387 & SS 299 auf Widerstandsfähigkeit auf Feuer, auf Feuer in Kombination mit Wassereinwirkung, sowie auf Feuer in Kombination mit mechanischen Einwirkungen getestet. Mechanische Einwirkungen resultieren u.a. aus der Deformation des Kabelkanals, in dem die Kabel eingelegt sind. Wesentlich ist daher, dass der Kabelkanal und die eingelegten Kabel in Kombination den Funktionserhalt im Brandfall während der vorgeschriebenen Dauer gewährleisten.

Im Brandfall und auch bei der Prüfung auf Funktionserhalt im Brandfall wird der Kabelkanal hohen Temperaturen ausgesetzt und dadurch deformiert. Dabei soll gewährleistet bleiben, dass die eingelegten Kabel während der angegebenen Dauer zuverlässig gehalten und nicht deformiert werden.

Die Kabelkanäle müssen daher über eine genügend hohe Festigkeit verfügen, damit sie den Belastungen im Brandfall standhalten. Die Montagevorrichtungen sind stabil zu montieren, damit sich der Kabelkanal nicht von der Decke oder der Wand lösen kann. Die eingesetzten Segmentanker müssen für den Brandfall zugelassen sein und mit genügender Eindringtiefe in den Bereich der Bewehrung der Betondecke eindringen.

Für den Funktionserhalt im Brandfall werden Decken aus Beton bzw. Stahlbeton nach DIN 1045 oder Porenbeton gemäß DIN 4223 vorgeschrieben, deren Feuerwiderstandsklasse nach DIN 4102-2 mindestens derjenigen der Kabelanlage mit Funktionserhalt im Brandfall entspricht.

Der Funktionserhalt der Systeme im Brandfall ist Bestandteil der Notfall-, von Elektro- und Medienplanung. Diese stützt sich die auf Zertifikate von Prüfstellen.

Problematisch ist, dass die Verhältnisse beim Brand eines Gebäudes komplexer sind als die im Labor, in dem die Rahmenbedingungen und Prüfungsparameter fest vorgegeben sind. In der praktischen Anwendung sind diese Rahmenbedingungen selten vorhanden, weshalb im Brandfall sehr oft einzelne Systeme früher als geplant ausfallen.

Aus der US 1 217 398 A ist eine Kabelführungsvorrichtung mit einem Kabelkanal bekannt, welcher mittels einer Befestigungsvorrichtung an einer Decke montierbar ist.

Trotz den aufwändigen Massnahmen, die den Funktionserhalt im Brandfall gewährleisten sollen, wäre es wünschenswert, den Funktionserhalt der Kabelführungsvorrichtung und insbesondere der eingelegten Kabel weiter abzusichern und auszubauen.

Der vorliegenden Erfindung liegt daher die Aufgabe zugrunde, eine Kabelführungsvorrichtung mit verbessertem Funktionserhalt im Brandfall zu schaffen.

Die Kabelführungsvorrichtung soll ferner raumsparend gelagert und transportiert und ohne Mehraufwand installiert werden können.

Weiterhin soll die Kabelführungsvorrichtung flexibel an die Bedürfnisse der Anwender anpassbar sein.

Diese Aufgabe wird mit einer Kabelführungsvorrichtung gelöst, welcher die in Anspruch 1 angegebenen Merkmale aufweist. Vorteilhafte Ausgestaltungen der Erfindung sind in weiteren Ansprüchen angegeben.

Die Kabelführungsvorrichtung, die für den Funktionserhalt im Brandfall ausgelegt ist, umfasst einen Kabelkanal mit einem Kanalboden und beidseits daran anschliessenden Kanalwänden, die eine zur Aufnahme von Medienleitungen, insbesondere Kabel, vorgesehene Kanalöffnung begrenzen. Weiter umfasst die Kabelführungsvorrichtung wenigstens eine mit einem Dübel oder Segmentanker versehene Befestigungsvorrichtung, die der Montage des Kabelkanals an einer Gebäudedecke dient.

Erfindungsgemäss ist ein mechanisches Abdeckelement, mittels dessen zumindest die in den Kabelkanal eingelegten Kabel gegen die Einwirkung von Betonteilen geschützt sind, und/oder ein isolierendes thermisches Abdeckelement oberhalb des Kabelkanals gehalten, mittels dessen die Wärmeeinwirkung im Brandfall auf die Gebäudedecke reduziert und dem Lösen von Betonteilen entgegen gewirkt wird.

Erfindungsgemäss wurde festgestellt, dass die üblichen Testmethoden mit den formellen Rahmenbedingungen dem Brandfall in der Praxis nicht gerecht werden. Mittels des mechanischen und/oder thermischen Abdeckelements erfolgt eine Sicherung des Kabelkanals und der eingelegten Kabel gegen Einwirkungen der Betondecke im Brandfall, die von den staatlichen Prüfstellen und den Normen und somit auch von den Elektroplanern nicht berücksichtigt wurden.

Betondecken können bereits beim Bau, vor allem aber nach längerem Betrieb des Gebäudes wesentlich von den Normen abweichen, weil verschiedene Teile einer Baustruktur unterschiedlichen Einwirkungen ausgesetzt sind. Während in einem Gebäudebereich die Räume stets trocken und die Temperatur konstant sind, können in einem anderen Gebäudebereich regelmässig Nässe und Feuchtigkeit sowie Temperaturschwankungen auftreten. In Gebäudebereichen, in denen die klimatischen Verhältnisse oft Änderungen unterworfen sind, treten besonders belastende Einwirkungen auf die Bausubstanz auf. Durch thermische Änderungen und entsprechende Einwirkungen auf die metallene Bewehrung resultieren wechselnde Spannungen im Beton, weshalb oft Risse entstehen. Auch durch eindringende Nässe und Feuchtigkeit wird die Bausubstanz regelmässig geschwächt.

Die Grundlagen des Betonbaus sind in [2], Pickhardt, Roland / Bose, Thomas / Schäfer, Wolfgang: Beton - Herstellung nach Norm, Arbeitshilfe für Ausbildung, Planung und Baupraxis, 19. überarbeitete Auflage 2012, Herausgeber: Beton Marketing Deutschland GmbH, Erkrath, beschrieben.

Die Betondeckung und die dafür vorgesehene Bewehrung, die üblicherweise in zwei Lagen vorgesehen wird, sind in [2], Kapitel 10, Seiten 66-71, beschrieben.

Stahlbeton ist ein Verbundwerkstoff, der aus den beiden Komponenten Beton und Bewehrungsstahl besteht. Ein Verbund beider Komponenten entsteht durch die Verklebung mit dem Bindemittel Zement und die Rippung des runden Bewehrungsstahls. Beton verfügt über eine hohe Druckfestigkeit und nur eine geringe Zugfestigkeit. Das Tragprinzip beim Stahlbeton ist es daher, auf Zug Bauteile mit Stahl zu verstärken, also zu bewehren, und in den übrigen Bereichen die Druckfestigkeit des Betons auszunutzen (siehe: http://de.wikipedia.org/wiki/Stahlbeton).

Durch thermische Änderungen und eindringende Nässe und Feuchtigkeit wird regelmässig die Verklebung von Beton und Bewehrungsstahl angegriffen. Betondecken, die gemäss vorgegebenen Normen in gleicher Weise gefertigt wurden, können somit nach längerer Betriebsdauer unterschiedliche Eigenschaften aufweisen, so dass die diesbezüglichen Annahmen gegebenenfalls nicht mehr zu treffen. Betonelemente, die durch Risse geschwächt sind, weisen ein geändertes Temperaturverhalten auf. Insbesondere treten Änderungen der Temperatur-Zeit-Kurven auf, so dass bei rascherem Aufheizen, d.h. im Brandfall, der Dampfdruckaufbau im Betoninnern schneller abläuft und das so genannte Abplatzen der Betondeckung frühzeitiger auftreten kann.

Teile des Betons, die sich durch den Vorgang des Abplatzens von der Decke lösen und auf den Kabelkanal fallen, können den Kabelkanal verformen, weshalb die eingelegten Kabel durch die Kabelbahn nicht mehr in dem erforderlichen Masse gestützt werden und dadurch erhöhten Belastungen ausgesetzt sind. Ferner können mechanische Erschütterungen des Kabelkanals auftreten, die auf die eingelegten Kabel übertragen werden. Besonders kritisch ist es, wenn gelöste Betonteile direkt auf die eingelegten Kabel fallen. Dabei ist zu beachten, dass im Brandfall eine Petrifizierung der Kabelisolation erfolgt, wobei zwar die elektrischen Isolationseigenschaften, nicht aber die mechanischen Eigenschaften der Kabelisolation erhalten bleiben. Die Kabelisolation verliert ihre Flexibilität und wird spröde. Durch das Auftreffen von Betonteilen kann die Kabelisolation in der Folge vom Leiter getrennt werden, wodurch Kurzschlüsse resultieren.

Der nach oben offene Kabelkanal bzw. die nach oben offene Kanalöffnung ist daher problematisch. Dank dem erfindungsgemässen mechanischen Abdeckelement können abplatzende Betonteile nicht mehr von oben in den Kabelkanal und direkt auf die Kabel fallen.

Insbesondere soll die Kanalöffnung durch das mechanische Abdeckelement abgedeckt werden. Die Abdeckung nur der Kabelkanalöffnung ist hinsichtlich der Einsparung von Material insbesondere dann zweckmässig, wenn die Kanalwände nach oben gegeneinander geneigt sind, und das eingelegte Kabel ihrerseits schützen.

In vorzugsweisen Ausgestaltungen wird der Kabelkanal durch das Abdeckelement hingegen über die volle Breite abgedeckt und abgeschirmt.

Das Abdeckelement, beispielsweise ein Blechstreifen, kann einfach gefertigt und installiert werden. Besonders einfach kann das Abdeckelement in Verbindung mit Dübeln bzw. Segmentankern installiert werden, mittels denen auch der Kabelkanal gehalten wird.

Mittels der Segmentanker und wenigstens einer Schraubenmutter kann das Abdeckelement unmittelbar über dem Kabelkanal, oberhalb des Kabelkanals von der Decke beabstandet oder an der Decke anliegend gehalten werden. Mittels einer Schraubenmutter und gegebenenfalls Unterlagsscheiben kann das Abdeckelement sogar gegen die Decke gepresst werden. Eine separate Verschraubung oder sonstige Verbindung mit der Decke ist auf Wunsch des Anwenders ebenfalls realisierbar.

Durch Verformung des Metallstreifens kann dieser mit einer relativ hohen Festigkeit versehen werden, so dass eine Gegenkraft auf gelöste Betonteile ausgeübt, und diese zur Seite hin verdrängt werden können. Insbesondere kann das Abdeckelement vorteilhaft mit abgewinkelten oder gekrümmten, gegebenenfalls gerollten Wandendstücken oder eingeformten Sicken oder Faltungen versehen werden, die parallel und/oder quer zur Längsachse des Kabelkanals verlaufen. Diese Verformung des Abdeckelements erlaubt es, eine erhöhte Festigkeit des Abdeckelements auch mit geringeren Materialdicken zu erreichen. Das Abdeckelement kann aus Stahlblech oder einer Legierung mit einer Dicke im Bereich von z.B. 0,5 mm bis 2,5 mm gefertigt werden. Alternativ kann die Abdeckung auch durch ein Gitter gebildet werden.

Durch die Anordnung eines Abdeckelements an der Betondecke reduziert sich an dieser Stelle die Wärmeeinwirkung. Der Streifen oberhalb des Kabelkanals wird gegen einwirkendes Flammen abgeschattet, so dass sich die Erwärmung der Betondecke oberhalb des Kabelkanals verzögert. Der Dampfdruckaufbau im Betoninnern wird dadurch reduziert, so dass ein Abplatzen oberhalb des Kabelkanals vermieden wird. Die Wirkung der Metallplatte entspricht dabei der Wirkung eines Hitzeschilds, der die Wärmeübertragung nicht unwesentlich verzögert.

Das Abdeckelement hat daher zwei verschiedene Wirkungen, die beide denselben Erfolg bewirken. Einerseits eine Vermeidung des Auftreffens von Betonteilen auf dem Kabelkanal und andererseits eine Stabilisierung der Betondecke durch thermische Isolation selbst. Diese Wirkungen können einzelnen oder in Kombination mit einem oder mehreren Abdeckelementen erzielt werden.

Erfindungsgemäss wird daher in einer ersten Ausgestaltung vorgeschlagen eine Abdeckung zu verwenden, die dem mechanischen Schutz des Kabelkanals bzw. der Abwehr herunterfallender Betonteile dient. In einer zweiten erfindungsgemässen Ausgestaltung wird vorgeschlagen, eine Abdeckung zu verwenden, die primär der Isolation bzw. dem Brandschutz der Betondecke dient, so dass ein Dampfdruckaufbau im Betoninnern und das Abplatzen grundsätzlich vermieden wird. Möglich ist auch die Verwendung eines thermischen mechanischen Abdeckelements, welches beide Schutzfunktionen zur Verfügung stellt.

In vorzugsweisen Ausgestaltungen werden wenigstens zwei Abdeckelemente vorgesehen, von denen das erste der mechanischen Abdeckung und das zweite der thermischen Isolierung und Vermeidung des Abplatzens dient. Zur thermischen Isolation wird zwischen dem metallenen Abdeckelement, das dem mechanischen Schutz dient, und der Betondecke zusätzlich eine flächige flexible und/oder thermisch isolierende Zwischenplatte vorgesehen. Es können Brandschutzplatten aus Mineralwolle oder weiteren brandresistenten Materialien oder Brandschutzbeschichtungen kostengünstig oberhalb der gesamten Länge des Kabelkanals an der Betondecke vorgesehen werden. Die Zwischenschicht kann mit der Decke verklebt oder mittels einer Halteplatte, beispielsweise des ersten Abdeckelements gehalten werden.

Die Verwendung eines thermisch isolierenden Abdeckelements kann unabhängig von der Montageart, die Deckenmontage oder Wandmontage, vorteilhaft eingesetzt werden, um die Betondecke vor Brandeinwirkungen zu schützen. Zu beachten ist, dass das verwendete Material für den Funktionserhalt im Brandfall ausgelegt wird, um das Abplatzen für die geforderte Zeitdauer zu verhindern. Vorzugsweise wird das Isolationsmaterial unter Berücksichtigung der Bauqualität, der geometrischen Abmessungen und der zu erwartenden thermischen und chemischen Einwirkungen auf die Bausubstanz gewählt. Der Installateur wird Betonbereiche, die einer erhöhten Belastung ausgesetzt sind vorzugsweise mit einer wirkungsvolleren, z.B. dickeren Isolationsbahn versehen. Auf diese Weise wird der kritische Betonstreifen oberhalb des Kabelkanals noch besser geschützt. Mittels des Abdeckelements und gegebenenfalls der Zwischenplatte wird in einem ersten Schritt ein Abplatzen an den kritischen Stellen der Betondecke innerhalb des erforderlichen Zeitraums verhindert. Sollte ein Abplatzen der Betondecke trotzdem auftreten, so verhindert das Abdeckelement, dass gelöste Betonteile auf den Kabelkanal und auf die installierten Kabel fallen können.

In einer weiteren vorzugsweisen Ausgestaltung bilden das mechanische Abdeckelement und/oder das thermische Abdeckelement einen Notfallkanal, der zur Führung von Notfallleitungen verwendbar ist. Auf diese Weise erfüllt die für den Funktionserhalt im Brandfall vorgesehene Kabelführungsvorrichtung erfindungsgemäss drei zusätzliche wichtige Sicherheitsfunktionen. Das Abplatzen von Betonteilen wird durch die Isolation der Betondecke verhindert, abplatzende Betonteile werden insbesondere vom mechanischen Abdeckelement aufgefangen und weggeführt. Das einen Hitzeschutzschild bildende mechanische Abdeckelement und/oder das isolierende thermische Abdeckelement werden genutzt, um wenigstens eine Notfallleitung besonders zu schützen.

Die erfindungsgemässe Kabelführungsvorrichtung kann somit mit dem Kabelkanal eine erste Sicherheitsnorm mit einem Funktionserhalt während beispielsweise 60 oder 90 Minuten und mit dem Notfallkanal eine zweite Sicherheitsnorm mit einem Funktionserhalt während beispielsweise 120 Minuten erfüllen.

Das Abdeckelement wird vorzugsweise aus feuerfestem und hochtemperaturbeständigen Material, zum Beispiel aus Keramik oder einer Legierung aus Eisen, Chrom und Nickel, gefertigt. Das verwendete Material erfüllt vorzugsweise zumindest einen der Qualitätsstandards DIN 17750 und EN 10302. Dadurch wird gesichert, dass das Abdeckelement auch im Brandfall seine Eigenschaften behält und seine Funktionen erfüllt.

Die erfindungsgemässe Lösung kann mit beliebigen Kabelkanälen realisiert werden. Beispielsweise können mit Längs- und Querstegen versehene Gitterbahnen, aus Blech geformte Kabelbahnen oder Kabelpritschen installiert werden, deren Kanalwände durch stabförmige Traversen miteinander verbunden sind. Für alle Ausgestaltungen des Kabelkanals wird das installierte Kabel geschützt und der erfindungsgemässe Erfolg erzielt.

In vorzugsweisen Ausgestaltungen umfasst der Kabelkanal zwei vorzugsweise identische Gitterstrukturen mit Längsstegen und Querstegen. In einer ersten Ausgestaltung wird vorgesehen, dass einige der Querstege derart ausgestaltet sind, dass sie wechselseitig in der benachbarten Gitterstruktur verankerbar bzw. verankert sind. Alternativ wird vorgesehen, dass die Querstege der Kanalteile mit Haken versehen sind, so dass die Haken eines Kanalteils mit einem Längssteg des anderen Kanalteils koppelbar sind.

Vorzugsweise sind alle Teile des Kabelkanals, wie geformtes Blech, Gitterstäbe und/oder Profilelemente, aus feuerfestem und korrosionsbeständigem Material, wie Stahl oder einer Metalllegierung, vorzugsweise einer Legierung aus Eisen, Chrom und Nickel, gefertigt. Das verwendete Material erfüllt vorzugsweise zumindest einen der Qualitätsstandards DIN 17750 und EN 10302.

Der Kabelkanal ist daher selbst für den Funktionserhalt im Brandfall ausgelegt und erfüllt seine Funktionen zuverlässig. Die gesamte Kabelführungsvorrichtung, einschliesslich der eingelegten Kabel, ist ein System, welches gesamthaft den Funktionserhalt im Brandfall gewährleistet. Die erfindungsgemässe Kabelführungsvorrichtung ist für die praktische Anwendung ausgelegt und resistent gegenüber Abweichungen der üblichen Rahmenbedingungen.

Zum Halten der Kabelkanäle können verschiedene Haltevorrichtungen vorgesehen werden. Vorzugsweise ist der Segmentanker mit einer Haltevorrichtung verbunden, die wenigstens eine dem Halten des Kabelkanals dienende Hakenreihe und/oder wenigstens einen Ausleger aufweist, auf den der Kabelkanal aufgesetzt werden kann. Die Hakenreihe kann in Montageöffnungen in den Kanalwänden eingreifen oder Gitterstäbe, insbesondere Längsstege der Gitterstruktur umgreifen und den Kabelkanal halten. Haltevorrichtungen dieser Art können durch einen Segmentanker und Montageschrauben, die ebenfalls die erforderliche Korrosionsfestigkeit und Temperaturfestigkeit aufweisen, mit der Gebäudedecke verbunden werden.

In einer vorzugsweisen Ausgestaltung wird eine Haltevorrichtung vorgesehen, die zumindest teilweise innerhalb des Kabelkanals angeordnet und beidseits vorzugsweise durch Haken mit den beiden Kanalwänden verbunden ist.

Die Haltevorrichtung ist vorzugsweise derart ausgestaltet, dass sie auch dann zur Verbindung der beiden Kanalwände verwendet werden kann, wenn sie nicht von einem Dübel gehalten ist. Auf diese Weise kann die Haltevorrichtung zur Stabilisierung des Kabelkanals und zum zumindest teilweisen Abschliessen der Kanalöffnung verwendet werden.

Durch die zusätzliche Verwendung des Abdeckelements oder der Abdeckelemente wird kaum Raum in Anspruch genommen. Die Abdeckelemente und die Kabelkanäle sind vorzugsweise derart ausgestaltet, dass sie formschlüssig aneinander anliegend stapelbar sind und raumsparend gelagert und transportiert werden können.

Nachfolgend wird die Erfindung anhand von Zeichnungen näher erläutert. Dabei zeigt:
- Fig. 1: eine Befestigungsvorrichtung 1 für eine erfindungsgemässe Kabelführungsvorrichtung 3 mit einem in einer Betondecke 9 angebrachten Segmentanker 13, welcher eine der Installation eines Kabelkanals dienende Haltevorrichtung 11 und ein plattenförmiges Abdeckelement 12 hält, das oberhalb des Kabelkanals 2 an die Betondecke 9 angedrückt wird;
- Fig. 2a: eine erfindungsgemässe Kabelführungsvorrichtung 3 mit der Befestigungsvorrichtung 1 von Fig. 1 und einem Kabelkanal 2, der eine Gitterstruktur mit Querstegen 21 und Längsstegen 22 aufweist;
- Fig. 2b: die Kabelführungsvorrichtung 3 von Fig. 2a mit dem mit der Haltevorrichtung 11 verbundenen Kabelkanal 2 und einem mechanischen Abdeckelement 12 sowie einem thermischen Abdeckelement 120, welches an der Betondecke 9 anliegt;
- Fig. 2c: eine erfindungsgemässe Kabelführungsvorrichtung 3 mit der Befestigungsvorrichtung 1 von Fig. 1, einem Kabelkanal 2, sowie einem thermischen Abdeckelement 120;
- Fig. 2d: die Kabelführungsvorrichtung 3 von Fig. 2c mit dem der Isolation der Betondecke 9 dienenden thermischen Abdeckelement 120 sowie einem der mechanischen Abdeckung des Kabelkanals 2 dienenden mechanischen Abdeckelement 12;
- Fig. 3a: eine vorzugsweise ausgestaltete Befestigungsvorrichtung 1 mit einer Haltevorrichtung 11, die zwei mit je zwei Hakenreihen versehene Vorrichtungsteile 11A, 11B aufweist;
- Fig. 3b: eine erfindungsgemässe Kabelführungsvorrichtung 3 mit der Befestigungsvorrichtung 1 von Fig. 3a und einem Kabelkanal 2, der zwei asymmetrisch gestaltete Kanalteile 2A, 2B aufweist;
- Fig. 3c: die Kabelführungsvorrichtung 3 von Fig. 3b mit dem mechanischen Abdeckelement 12, welches beidseitig mittels Schraubenmuttern 131 beabstandet von der Betondecke 9 oberhalb des Kabelkanals 2 gehalten ist;
- Fig. 4a: eine erfindungsgemässe Kabelführungsvorrichtung 3 mit der Befestigungsvorrichtung 1 von Fig. 3a und einem Kabelkanal 2, der zwei symmetrisch gestaltete Kanalteile 2A, 2B aufweist, die voneinander getrennt sind;
- Fig. 4b: die Kabelführungsvorrichtung 3 von Fig. 4a nach der Verbindung der beiden symmetrisch gestalteten Kanalteile 2A, 2B des Kabelkanals 2;
- Fig. 4c: die Kabelführungsvorrichtung 3 von Fig. 4b von vorne gezeigt;
- Fig. 4d: die Kabelführungsvorrichtung 3 von Fig. 4b mit nur einem Kanalteil 2, das durch ein mechanisches Abdeckelement 12 und ein thermisches Abdeckelement 120 abgedeckt ist und das eine mit der Haltevorrichtung 11 verbundene grössere Kanalwand 26 und eine kleinere Kanalwand 28 aufweist, die es erlaubt, Kabel von der Seite her einzulegen und zu halten;
- Fig. 4e: die Kabelführungsvorrichtung 3 von Fig. 4d mit einem mechanischen Abdeckelement 12 und einem thermischen Abdeckelement 120, die einen Notfallkanal bilden, der zur Führung von Notfallleitungen 82 vorgesehen ist;
- Fig. 5a: eine erfindungsgemässe Kabelführungsvorrichtung 3 mit der Befestigungsvorrichtung 1 von Fig. 3a und einem weiteren Kabelkanal 2, der zwei symmetrisch gestaltete Kanalteile 2A, 2B aufweist;
- Fig. 5b: den Kabelkanal 2 mit den zwei symmetrisch gestalteten Kanalteilen 2A, 2B von Fig. 5a; und
- Fig. 5c: raumsparend gestapelte Kanalteile 2A, 2B gemäss dem Kabelkanal 2 von Fig. 5a.

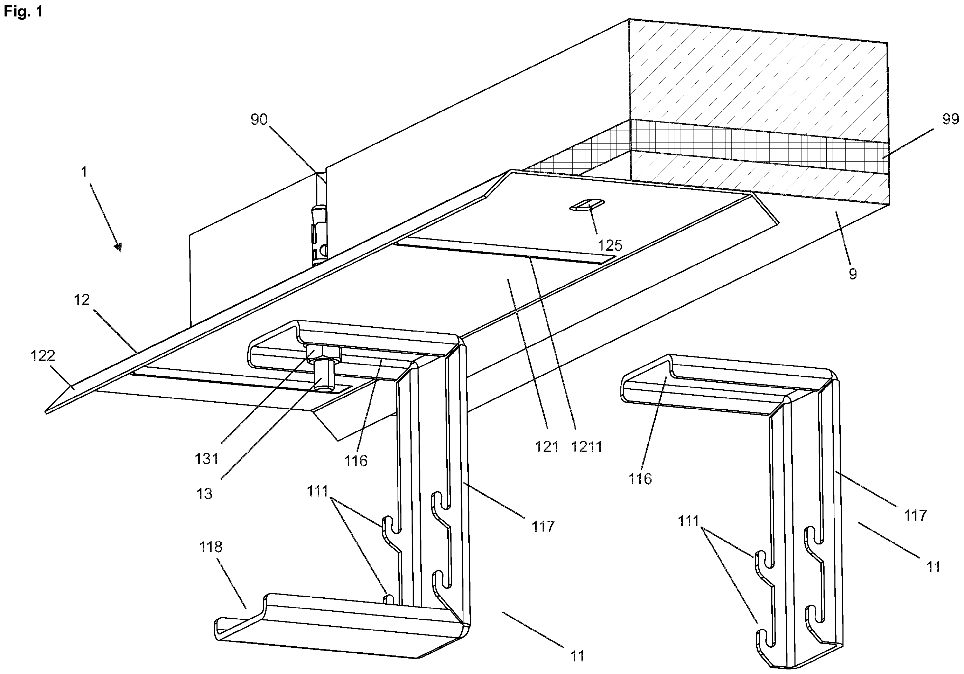

Fig. 1 zeigt eine erfindungsgemässe Befestigungsvorrichtung 1 mit einem in einer Betondecke 9 verankerten Segmentanker 13, welcher eine der Installation eines Kabelkanals dienende Haltevorrichtung 11 und ein plattenförmiges Abdeckelement 12 hält. Die Betondecke 9 ist in einer Schnittdarstellung gezeigt. Es ist ersichtlich, dass der Segmentanker 13 weit in die symbolisch gezeigte Bewährung hinein geführt ist.

Das Abdeckelement 12 ist ein Blechstreifen, der mit Verformungen versehen ist, die der Verstärkung dienen. Die Endstücke 122 an den beiden zueinander parallelen Seiten des Abdeckelements 12 sind nach unten abgewinkelt, wodurch einerseits eine Versteifung des Abdeckelements 12 erfolgt und andererseits eine Dachform resultiert, welche von oben einfallende Betonteile, die sich von der Betondecke 9 gelöst haben, nach aussen weggeführt. Im Mittelteil 121 des Abdeckelements 12 sind ebenfalls Einformungen 1211 vorgesehen, welche die Stabilität des Abdeckelements 12 erhöhen. Gezeigt sind Quersicken 1211, die bei Krafteinwirkung einer Faltung des Abdeckelements 12 um dessen Längsachse entgegenwirken. Zusätzlich können parallel zur Längsachse verlaufende Längssicken vorgesehen werden. Dieses Abdeckelement 12 dient somit dem mechanischen Schutz des Kabelkanals 2 und der eingelegten Kabel und ist somit ein mechanisches Abdeckelement.

Weiter sind im Mittelteil 121 Montageöffnungen 125 vorgesehen, durch die hindurch je ein Segmentanker 13 geführt werden kann, der in einer Bohrung 90 der Betondecke 9 verankert wird.

Das Abdeckelement 12 kann eine beliebige Länge aufweisen und mittels mehrerer Befestigungsvorrichtungen 1 montiert werden. Alternativ kann das Abdeckelement 12 auch nur von einem Segmentanker gehalten werden. Benachbarte Abdeckelemente 12 werden dabei vorzugsweise derart montiert, dass sie sich gegenseitig überlappen. Zu diesem Zweck können die Endstücke auch komplementär zueinander ausgebildet sein, so dass ein Abschlussrand eines Endstücks z.B. etwa um die Materialdicke angehoben ist und das benachbarte Endstück aufnehmen bzw. überdecken kann.

Der Elektroinstallateur wird Abdeckelemente 12 mit einer Länge verwenden, die es erlaubt, die stapelbaren Abdeckelemente 12 vorteilhaft zu transportieren.

Fig. 1 zeigt ferner eine Haltevorrichtung 11 in einer ersten und in einer zweiten Ausgestaltung. Die montierte Haltevorrichtung 11 ist in der ersten Ausgestaltung gezeigt, in der ein Kopfstück 116, ein vertikal ausgerichtetes Mittelstück 117 und ein Fussstück 118 vorgesehen sind.

Das Kopfstück 116 der Haltevorrichtung 11 ist vom Segmentanker 13 gehalten und wird mittels einer Schraubenmutter 131 gegen das Abdeckelement 12 und die Betondecke 9 gedrückt. Das Mittelstück 117 der Haltevorrichtung 11 ist mit zwei Hakenreihen 111 versehen, in die ein gitterförmiger Kabelkanal eingehängt werden kann. Das Fussstück 118 der Haltevorrichtung 11 ist horizontal ausgerichtet und dient dem Halten einer darauf aufgelegten Kabelbahn. Bei dieser Ausgestaltung der Haltevorrichtung 11 kann ein gitterförmiger Kabelkanal somit vom Mittelstück 117 und vom Fussstück 118 der Haltevorrichtung 11 gehalten werden.

Die Haltevorrichtung 11 in der zweiten gezeigten Ausgestaltung umfasst ein Kopfstück 116 und ein mit zwei Hakenreihen 111 versehenes Mittelstück 117, an dem ein gitterförmiger Kabelkanal aufgehängt werden kann.

Kabelpritschen und Kabelbahnen werden mittels eines Auslegers gehalten, der beispielsweise an einer Deckenstütze angeordnet ist.

In dieser Ausgestaltung der erfindungsgemässen Befestigungsvorrichtung 1 ist gezeigt, dass das Abdeckelement 12 an der Betondecke 9 anliegt und davon gelöste Betonteile in Position halten kann. Sofern sich ein Betonteil tatsächlich lösen sollte, wird es seitlich wegrutschen und am Kabelkanal vorbei nach unten fallen.

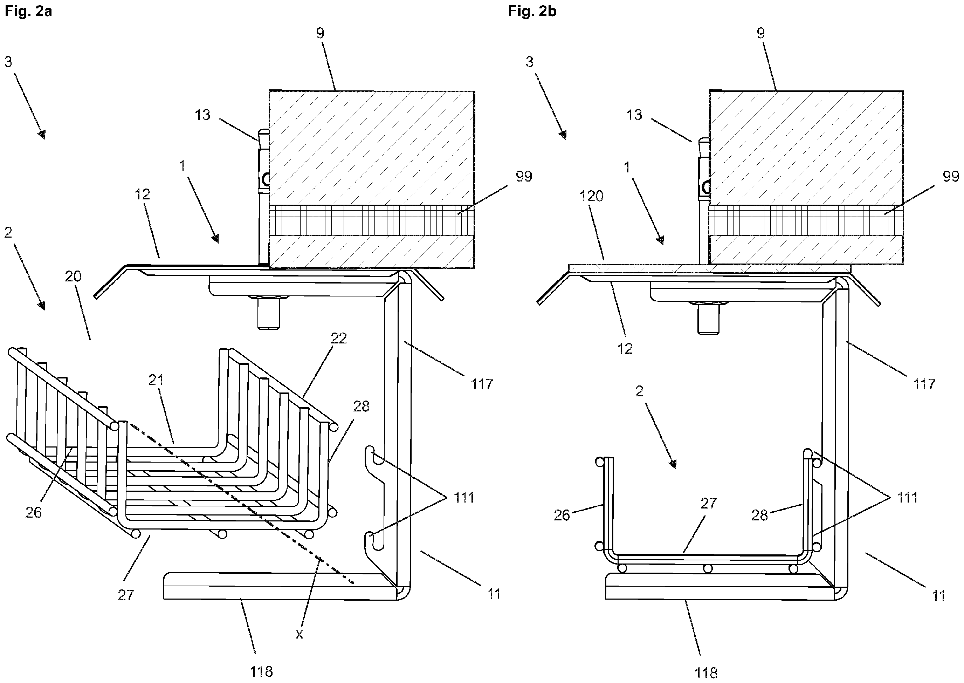

Fig. 2a zeigt eine erfindungsgemässe Kabelführungsvorrichtung 3 mit der Befestigungsvorrichtung 1 von Fig. 1 und einem Kabelkanal 2, der eine Gitterstruktur mit Querstegen 21 und Längsstegen 22 aufweist, die parallel zur Längsachse x des Kabelkanals 2 verlaufen.

In dieser Ausgestaltung weist der gitterförmige Kabelkanal 2 einen Kanalboden 27 und beidseits daran anschliessende Kanalwände 26, 28 auf, die parallel zueinander ausgerichtet sind. Die Breite des Kabelkanals 2 entspricht in dieser Ausgestaltung etwa der nach oben ausgerichteten Kanalöffnung 20 des Kabelkanals 2. Betonteile, die durch die Kanalöffnung 20 in den Kabelkanal 2 hineinfallen, können eingelegte Kabel auf der gesamten Breite des Kanalbodens 27 treffen. In diesem Fall ist der Schutz der in den Kabelkanal 2 eingelegten Kabel durch das Abdeckelement 12 besonders wichtig. Kabelkanäle 2 in dieser U-Profil-förmigen Ausgestaltung entsprechen dabei der üblichen Ausführungsform der Kabelkanäle aus dem Stand der Technik.

Fig. 2b zeigt die Kabelführungsvorrichtung 3 von Fig. 2a mit dem Kabelkanal 2, der in die Hakenreihen 111 des Mittelstücks 117 eingehängt und auf das Fussstück 118 abgestützt ist. Zwischen dem mechanischen Abdeckelement 12 und der Betondecke 9 ist ein plattenförmiges thermisches Abdeckelement 120 eingespannt, das vorzugsweise aus feuerfestem Material besteht, welches die Betondecke vor Flammeneinwirkung schützt. Durch das mechanische Abdeckelement 12 und das thermische Abdeckelement 120 wird die Wärmeeinwirkung auf die Betondecke 9 daher reduziert, als in den freiliegenden Nachbarbereichen. Sofern die Betondecke 9 Schwachstellen aufweisen sollte, so wird dadurch bewirkt, dass diese nicht zuerst oberhalb des Kabelkanals 2 aufbrechen.

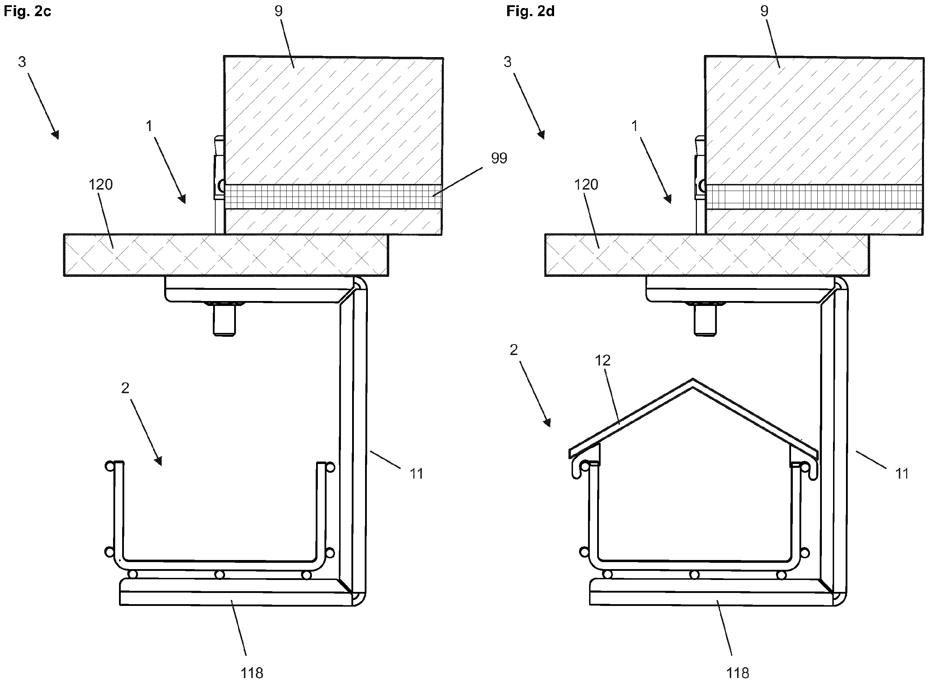

Fig. 2c zeigt eine erfindungsgemässe Kabelführungsvorrichtung 3 mit der Befestigungsvorrichtung 1 von Fig. 1, einem Kabelkanal 2, sowie einem thermischen Abdeckelement 120, welches einen Durchmesser im Bereich von z.B. 3 cm bis 10cm aufweist. Brandfeste und brandhemmende Materialien sind beispielsweise aus der EP0607812A1, die und der EP1164006A1 bekannt, die flammgeschützte thermoplastische Formmassen und brennfeste Laminate offenbaren. Formmassen und/oder Laminate oder weitere flammhemmende Schichten, werden oberhalb der Kabelführungsvorrichtung in der gewünschten Breite auf die Betondecke 9 aufgetragen.

Fig. 2d zeigt die Kabelführungsvorrichtung 3 von Fig. 2c mit dem der Isolation der Betondecke 9 dienenden thermischen Abdeckelement 120 sowie einem der mechanischen Abdeckung des Kabelkanals 2 dienenden mechanischen Abdeckelement 12, welches die Form eines Daches aufweist. In dieser Ausgestaltung erfolgt durch die beiden Abdeckelemente 12, 120 ein doppelter Schutz des Kabelkanals 2 und der darin eingelegten Kabel.

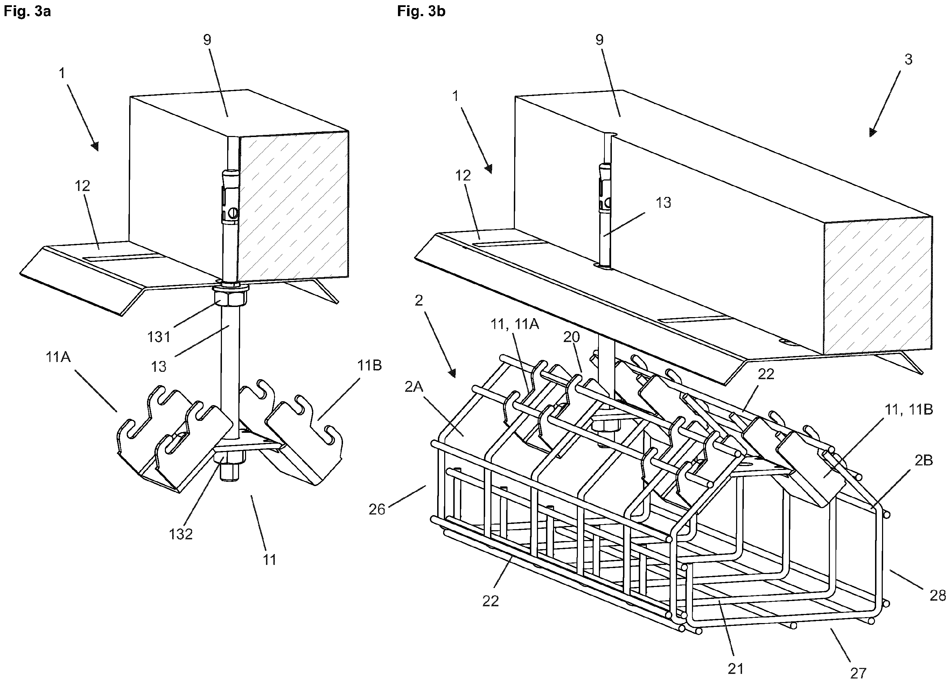

Fig. 3a zeigt eine vorzugsweise ausgestaltete Befestigungsvorrichtung 1 mit einer Haltevorrichtung 11, die zwei mit je zwei Hakenreihen versehene Vorrichtungsteile 11A, 11B aufweist. Diese Haltevorrichtung 11 ist besonders einfach ausgestaltet und kann mit den Hakenreihen aus einem Blechstück ausgestanzt und geformt werden. Die Haltevorrichtung 11 umfasst zwei gegeneinander geneigte Vorrichtungsteile 11A, 11B, die je mit zwei Hakenreihen versehen sind. Die Hakenreihen jedes Vorrichtungsteils 11A, 11B wurden je um 90° gegeneinander gebogen und sind parallel zueinander ausgerichtet.

Fig. 3b zeigt eine erfindungsgemässe Kabelführungsvorrichtung 3 mit der Befestigungsvorrichtung 1 von Fig. 3a und einem Kabelkanal 2, der zwei asymmetrisch gestaltete Kanalteile 2A, 2B umfasst. Die Kanalwände 26, 28 des Kabelkanals 2 sind an der Oberseite gegeneinander geneigt und werden von den beiden Vorrichtungsteilen 11A, 11B der Haltevorrichtung 11 von unten gehalten. Die Haltevorrichtung 11 wurde daher durch die Kanalöffnung 20 in den Kabelkanal 2 eingeführt und nach einer Drehung nach oben angehoben. Damit die Hakenreihen der Haltevorrichtung 11 in die Längsstege 22 eingehängt werden können, werden die Kanalwände 26, 28 beispielsweise elastisch gegeneinander geneigt und die Hakenreihen in die Längsstege 22 eingehängt. In der Folge wird die mit dem Segmentanker 13 verbundene Haltevorrichtung 11 zusätzlich von den Seitenwänden 26, 28 elastisch gehalten.

Zur Stabilisierung und zum teilweisen Verschliessen des Kabelkanals 2 können weitere Haltevorrichtungen 11 in der gleichen Weise an weiteren Stellen des Kabelkanals 2 mit den Seitenwänden 26, 28 verbunden werden, wie dies in Fig. 3b gezeigt ist.

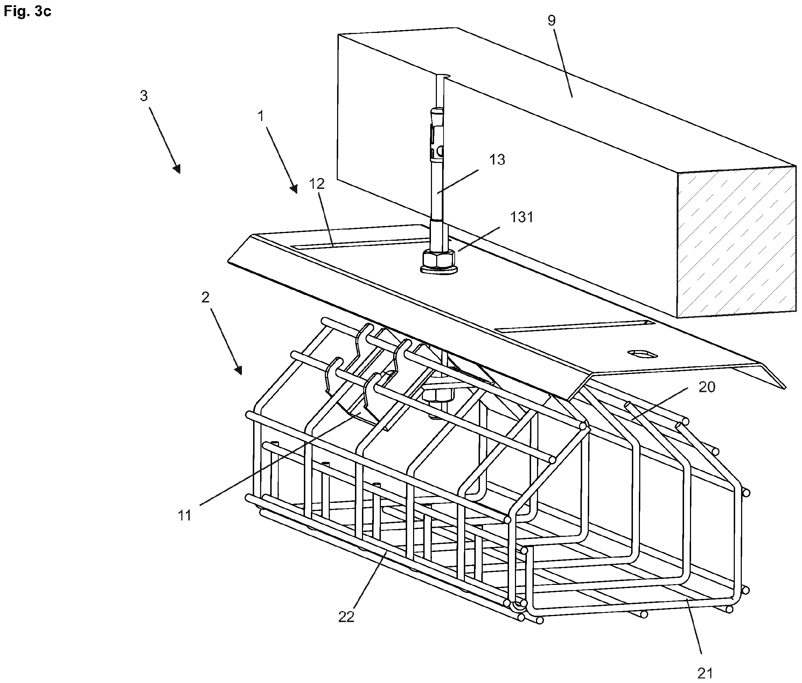

Fig. 3c zeigt die Kabelführungsvorrichtung 3 von Fig. 3b mit dem Abdeckelement 12, welches beidseitig mittels Schraubenmuttern 131 beabstandet von der Betondecke 9 oberhalb des Kabelkanals 2 gehalten ist. Auch in diesem Fall wird der Kabelkanal 2 durch das Abdeckelement 12 vor herunter fallenden Betonteilen geschützt. Zugleich kann die Kanalöffnung 20 durch das Abdeckelement 12 verschlossen werden.

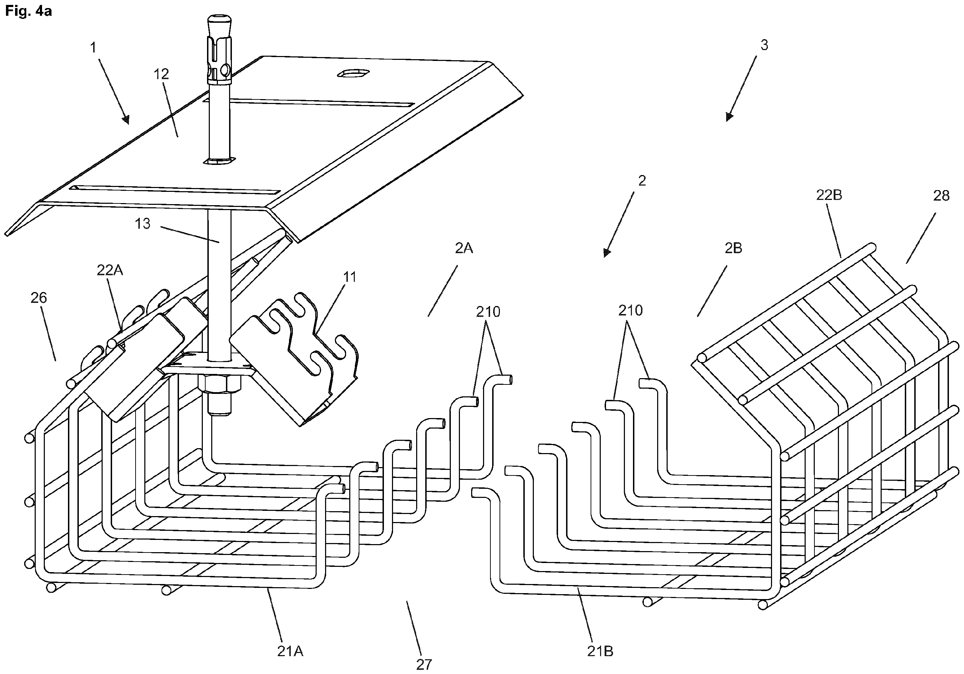

Fig. 4a zeigt eine erfindungsgemässe Kabelführungsvorrichtung 3 mit der Befestigungsvorrichtung 1 von Fig. 3a und einem Kabelkanal 2, der zwei symmetrisch bzw. identisch gestaltete Kanalteile 2A, 2B aufweist, die je eine vollständige Kanalwand 26 bzw. 28 und eine Hälfte des Kanalbodens 27 bilden.

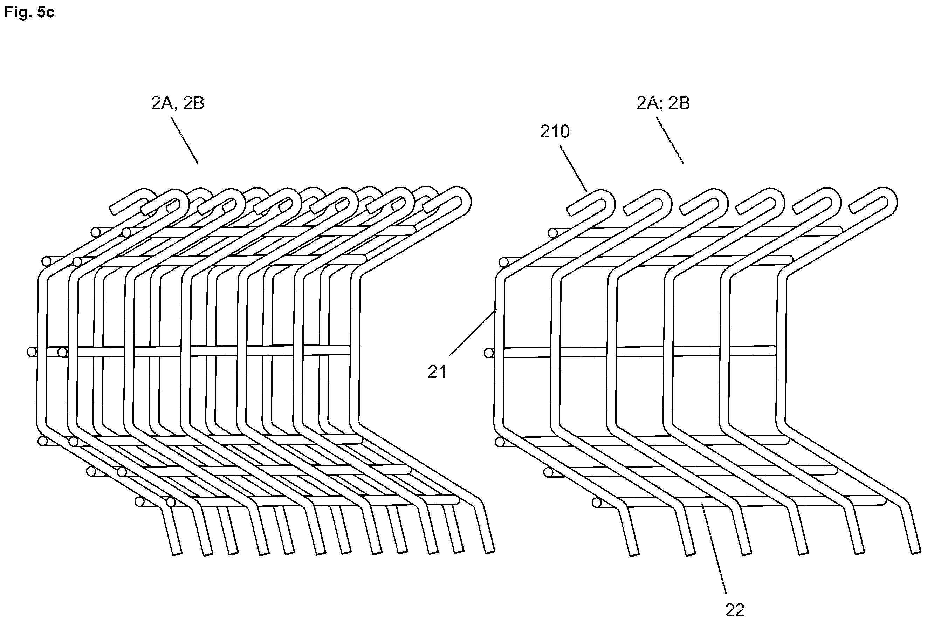

Beide Kanalteile 2A, 2B weisen miteinander verbundene Längsstege 22 und Querstege 21 auf. Die Querstege 21 sind derart ausgebildet, dass sie bis zur benachbarten Kanalwand 28 bzw. 26 reichen und mit einem Endstück 210 darin verankert oder zumindest abgestützt werden können. Die Endstücke 210 können beispielsweise hakenförmig ausgestaltet sein (siehe Fig. 5c), so dass sie einen Längssteg 22 der benachbarten Kanalwand 26 bzw. 28 umfassen können.

In Fig. 4a ist das Kanalteil 2A bereits in die Haltevorrichtung 11 eingehängt. Das zweite Kanalteil 2B kann und in einfacher Weise gegen das erste Kanalteil 2A geschoben und ebenfalls in die Haltevorrichtung 11 eingehängt werden. Obwohl die Endstücke 210 in diesem Fall gegebenenfalls nur auf den Längsstegen 22 der benachbarten Kanalwand 26 bzw. 28 aufliegen, können sich die beiden Kanalteile 2A, 2B nicht mehr voneinander lösen. Die auf die Querstege 21 einwirkende Last der installierten Kabel wird hingegen von den Querstegen 21 auf die benachbarte Kanalwand 26 bzw. 28 übertragen. Die Haltevorrichtung 11 weist in diesem Fall daher vorteilhaft eine Doppelfunktion auf. Einerseits wird der Kabelkanal 12 gehalten und andere werden die gegeneinander geführten Kanalwände 26 bzw. 28 fixiert.

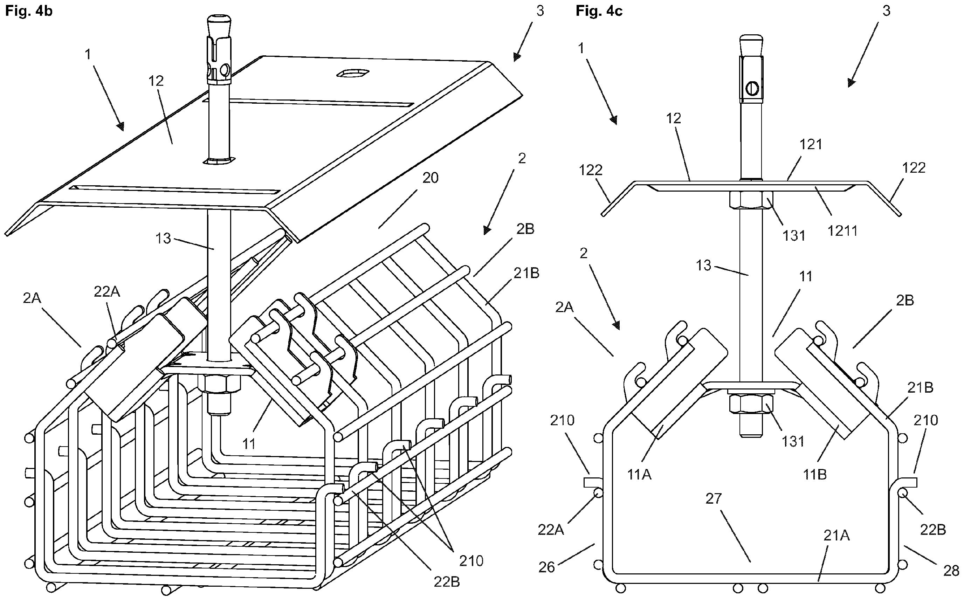

Fig. 4b zeigt die Kabelführungsvorrichtung 3 von Fig. 4a nach der Verbindung der beiden symmetrisch gestalteten Kanalteile 2A, 2B des Kabelkanals 2.

Fig. 4c zeigt die Kabelführungsvorrichtung 3 von Fig. 4b von vorn. Die beiden Kanalteile 2A, 2B werden durch die Vorrichtungsteile 11A, 11B der Haltevorrichtung 11 gehalten und können nicht mehr voneinander gelöst werden. Die Endstücke 210 der Querstege 21A bzw. 21B sind auf Längsstegen 22B bzw. 22A der benachbarten Kanalwand 26 bzw. 28 abgestützt.

Vorzugsweise sind die Endstücke 210 hakenförmig ausgestaltet, so dass sie die Längsstege 22A, 22B teilweise umschliessen.

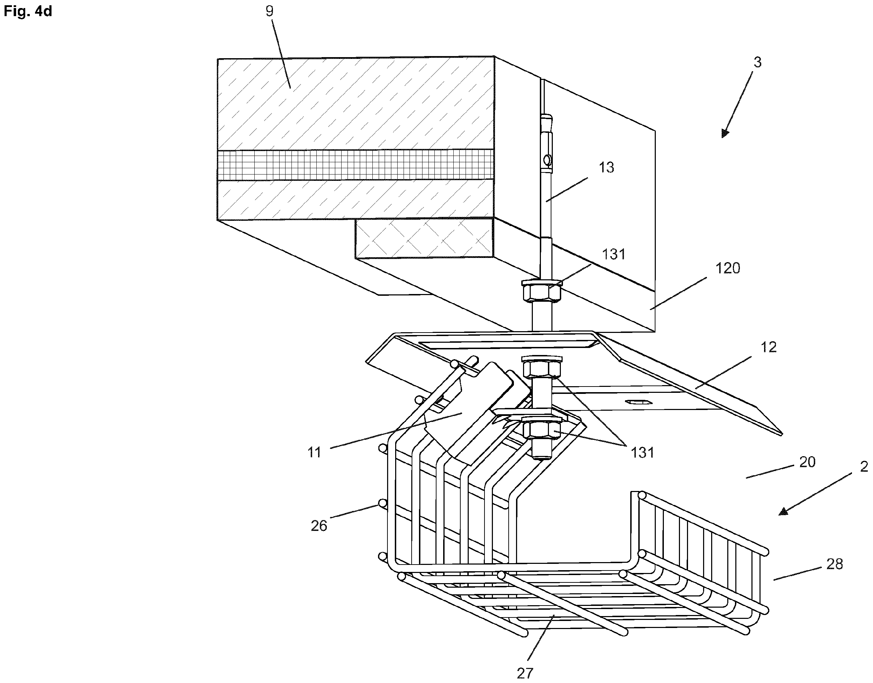

Fig. 4d zeigt die Kabelführungsvorrichtung 3 von Fig. 4b mit nur einem Kanalteil 2, das durch ein mechanisches Abdeckelement 12 und ein plattenförmiges thermisches Abdeckelement 120 abgedeckt ist und das eine mit der Haltevorrichtung 11 verbundene grössere Kanalwand 26 und eine kleinere Kanalwand 28 aufweist. Zwischen der kleineren Kanalwand 28 und dem auf dem Kanal 2 abgesenkten mechanischen Abdeckelement 20 wird die Kanalöffnung 20 freigehalten, durch die hindurch Kabel bequem in den Kabelkanal 2 eingelegt werden kann. Da der Kabelkanal 2 nur einseitig gehalten ist, wurde nur eine einteilige Haltevorrichtung 11 eingesetzt.

Möglich ist auch die Verwendung eines kombinierten thermischen mechanischen Abdeckelements, welches eine mechanische und eine thermische Schutzfunktion zur Verfügung stellt. Besonders einfach gelingt dies, wenn das in Fig. 4d gezeigte mechanische Abdeckelement 12 um 180° von unten nach oben gedreht wird, so dass eine nach oben geöffnetes U-Profil resultiert, das mit dem flammenhemmenden Material 120 gefüllt wird. Das um 180° gedrehte Abdeckelement kann wiederum als Kabelkanal verwendet werden, in dem besonders schützenswerte Kabel und Leitungen verlegt werden können

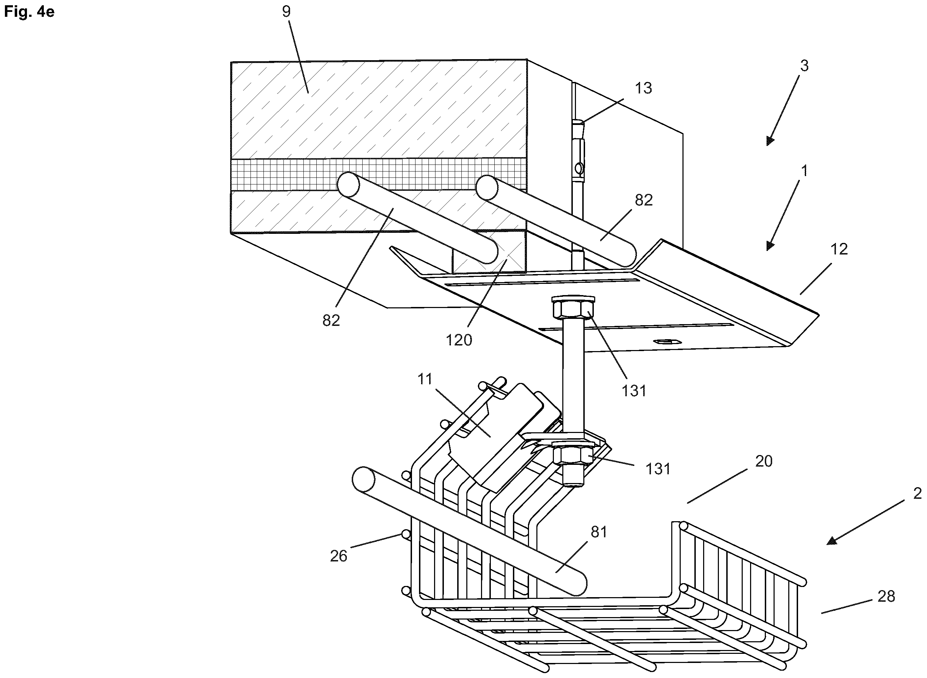

Fig. 4e zeigt die Kabelführungsvorrichtung 3 von Fig. 4d mit einem mechanischen Abdeckelement 12 und einem thermischen Abdeckelement 120, die einen Notfallkanal bilden, der zur Führung von Notfallleitungen 82 vorgesehen ist. Das mechanische Abdeckelement 12 weist ein nach oben geöffnetes U-Profil auf, welches als Notfallkanal dient. Innerhalb des mechanischen Abdeckelements 12 können Notfallleitungen 82 angeordnet werden. Vorzugsweise ist innerhalb des mechanischen Abdeckelements 12 flammenhemmendes Material bzw. ein thermisches Abdeckelement 120 angeordnet, welches die Notfallleitungen 82 beispielsweise in einer Ausnehmung hält und gegen einwirkende Wärme isoliert. Es ist gezeigt, dass eine der Notfallleitungen 82 innerhalb des thermischen Abdeckelements 120 geführt ist. Die Befestigungsvorrichtung 1 mit dem wenigstens einen Abdeckelement 12 erfüllt somit nebst den Befestigungsfunktionen mit Funktionserhalt im Brandfall zusätzlich die Funktion der thermischen Isolierung der Betondecke 9 zur Verhinderung des Abplatzens, die mechanische Schutzfunktion mit dem Schutz gegen gelöste Betonteile sowie die Funktion eines Notfallkanals, welcher besonders schützenswerte Notfallleitungen mit einem erhöhten Funktionserhalt im Brandfall führen kann.

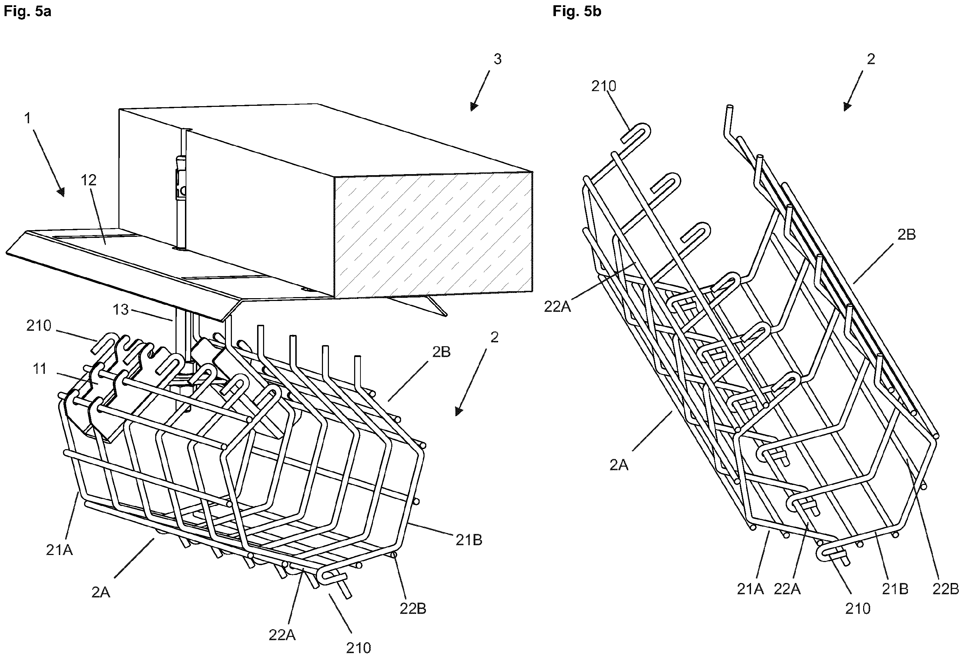

Fig. 5a zeigt eine erfindungsgemässe Kabelführungsvorrichtung 3 mit der Befestigungsvorrichtung 1 von Fig. 3a und einem weiteren Kabelkanal 2, der zwei symmetrisch gestaltete Kanalteile 2A, 2B aufweist. Die Kanalteile 2A, 2B umfassen Längsstege 22A, 22B und Querstege 21A, 21B, die an einem Ende je mit einem Haken 210 versehen sind. In der gezeigten Konfiguration sind die Haken 210 des zweiten Kanalteils 2B in einen der Längsstege 22A des ersten Kanalteils 2A eingehängt. Die beiden Kanalteile 2A, 2B sind daher oben mit den Hakenreihen der Haltevorrichtung 11 und unten durch die Haken 210 und einen Längssteg 22A miteinander verbunden.

Fig. 5b zeigt den Kabelkanal 2 mit den zwei symmetrisch gestalteten Kanalteilen 2A, 2B von Fig. 5a. Wie in Fig. 5a sind die beiden Kanalteile 2A, 2B mittels der hakenförmige Endstücke 210 miteinander gekoppelt.

Fig. 5c zeigt, dass auch die Kanalteile 2A, 2B von Kabelkanälen 2 gemäss Fig. 5a besonders raumsparend gestapelt werden können.

## Patentansprüche

1. Kabelführungsvorrichtung (3) mit Funktionserhalt im Brandfall mit einem Kabelkanal (2), der einen Kanalboden (27) und beidseits daran anschliessende Kanalwände (26, 28) aufweist, die eine zur Aufnahme von Medienleitungen, insbesondere Kabel (81), vorgesehene Kanalöffnung (20) begrenzen, und mit wenigstens einer mit einem Segmentanker (13) versehenen Befestigungsvorrichtung (1), die der Montage des Kabelkanals (2) an einer Gebäudedecke (9) dient, **dadurch gekennzeichnet, dass** der Segmentanker (13) mit einer Haltevorrichtung (11) verbunden ist, die dem Halten des Kabelkanals (2) dient, und dass von der Befestigungsvorrichtung (1), insbesondere dem Segmentanker (13), ein mechanisches Abdeckelement (12) oberhalb des Kabelkanals (2) und von diesem getrennt gehalten ist, mittels dessen zumindest die in den Kabelkanal (2) eingelegten Kabel gegen die Einwirkung von Betonteilen geschützt sind, die sich im Brandfall von der Gebäudedecke (9) lösen.

2. Kabelführungsvorrichtung (3) mit Funktionserhalt im Brandfall mit einem Kabelkanal (2), der einen Kanalboden (27) und beidseits daran anschliessende Kanalwände (26, 28) aufweist, die eine zur Aufnahme von Medienleitungen, insbesondere Kabel (81), vorgesehene Kanalöffnung (20) begrenzen, und mit wenigstens einer mit einem Segmentanker (13) versehenen Befestigungsvorrichtung (1), die der Montage des Kabelkanals (2) an einer Gebäudedecke (9) dient, **dadurch gekennzeichnet, dass** der Segmentanker (13) mit einer Haltevorrichtung (11) verbunden ist, die dem Halten des Kabelkanals (2) dient, und dass von der Befestigungsvorrichtung (1), insbesondere dem Segmentanker (13), ein isolierendes thermisches Abdeckelement (120) oberhalb des Kabelkanals (2) von diesem getrennt gehalten ist, mittels dessen die Wärmeeinwirkung im Brandfall auf die Gebäudedecke reduziert und dem Lösen von Betonteilen entgegen gewirkt wird.

3. Kabelführungsvorrichtung (3) mit Funktionserhalt im Brandfall mit einem Kabelkanal (2), der einen Kanalboden (27) und beidseits daran anschliessende Kanalwände (26, 28) aufweist, die eine zur Aufnahme von Medienleitungen, insbesondere Kabel (81), vorgesehene Kanalöffnung (20) begrenzen, und mit wenigstens einer mit einem Segmentanker (13) versehenen Befestigungsvorrichtung (1), die der Montage des Kabelkanals (2) an einer Gebäudedecke (9) dient, **dadurch gekennzeichnet, dass** der Segmentanker (13) mit einer Haltevorrichtung (11) verbunden ist, die dem Halten des Kabelkanals (2) dient, und dass von der Befestigungsvorrichtung (1), insbesondere dem Segmentanker (13), ein mechanisches Abdeckelement (12) oberhalb des Kabelkanals (2) und von diesem getrennt gehalten ist, mittels dessen zumindest die in den Kabelkanal (2) eingelegten Kabel gegen die Einwirkung von Betonteilen geschützt sind, die sich im Brandfall von der Gebäudedecke (9) lösen, und dass von der Befestigungsvorrichtung (1), insbesondere dem Segmentanker (13), ein isolierendes thermisches Abdeckelement (120) oberhalb des Kabelkanals (2) von diesem getrennt gehalten ist, mittels dessen die Wärmeeinwirkung im Brandfall auf die Gebäudedecke reduziert und dem Lösen von Betonteilen entgegen gewirkt wird.

4. Kabelführungsvorrichtung (3) nach Anspruch 1 oder 3, **dadurch gekennzeichnet, dass** das mechanische Abdeckelement (12) ein Metallstreifen ist, der vorzugsweise aus einem Blech geformt ist, und der Verformungen, wie abgewinkelte oder gekrümmte Seitenenden 122, oder eingeformte Sicken (1211) aufweist, die parallel und/oder quer zur Längsachse (x) des Kabelkanals (2) verlaufen.

5. Kabelführungsvorrichtung (3) nach Anspruch 1 oder 3, **dadurch gekennzeichnet, dass** das mechanische Abdeckelement (12) (120) mittels des Segmentankers (13) und vorzugsweise wenigstens einer daran vorgesehenen Schraubenmutter (131) von der Betondecke (9) beabstandet oder daran anliegend gehalten ist.

6. Kabelführungsvorrichtung (3) nach Anspruch 2 oder 3, **dadurch gekennzeichnet, dass** das thermische Abdeckelement (120) mittels des Segmentankers (13) und vorzugsweise wenigstens einer daran vorgesehenen Schraubenmutter (131) von der Betondecke (9) beabstandet oder daran anliegend gehalten ist.

7. Kabelführungsvorrichtung (3) nach Anspruch 2 oder 3, **dadurch gekennzeichnet, dass** das gegebenfalls plattenförmige thermische Abdeckelement (120) aus brandfestem und brandhemmendem Material, wie einer flammgeschützten thermoplastische Formmasse und oder einem brennfesten Laminat besteht, das mit der Gebäudedecke (9) verbunden, gegebenenfalls verklebt ist.

8. Kabelführungsvorrichtung (3) nach einem der Ansprüche 1 - 7, **dadurch gekennzeichnet, dass** der Kabelkanal eine mit Längs- und Querstegen versehene Gitterbahn, eine aus Blech geformte Kabelbahn oder eine Kabelpritsche ist, deren Kanalwände (26, 28) durch stabförmige Traversen miteinander verbunden sind, die den Kanalboden (27) bilden.

9. Kabelführungsvorrichtung (3) nach Anspruch 1 oder 3, **dadurch gekennzeichnet, dass** das mechanische Abdeckelement (12) und/oder wenigstens ein Teil des Kabelkanals (2), wie geformtes Blech, Gitterstäbe und/oder Profilelemente, aus feuerfestem und korrosionsbeständigem Material, wie Stahl oder einer Metalllegierung, vorzugsweise einer Legierung aus Eisen, Chrom und Nickel, besteht, das vorzugsweise einen der Qualitätsstandards DIN 17750 oder EN 10302 erfüllt.

10. Kabelführungsvorrichtung (3) nach Anspruch 1 oder 3, **dadurch gekennzeichnet, dass** das mechanische Abdeckelement (12), das vorzugsweise an der Gebäudedecke (9) anliegt, einen Notfallkanal bildet, welcher der Aufnahme und dem Halten von Notfallleitungen (82) dient.

11. Kabelführungsvorrichtung (3) nach Anspruch 2 oder 3, **dadurch gekennzeichnet, dass** das thermische Abdeckelement (120), das vorzugsweise an der Gebäudedecke (9) anliegt, einen Notfallkanal bildet, welcher der Aufnahme und dem Halten von Notfallleitungen (82) dient.

12. Kabelführungsvorrichtung (3) nach Anspruch 2 oder 3, **dadurch gekennzeichnet, dass** das thermische Abdeckelement (120) als Platte oder Laminat ausgebildet ist, das Ausnehmungen zur Aufnahme der Notfallleitungen (82) aufweist.

13. Kabelführungsvorrichtung (3) nach einem der Ansprüche 1 - 12, **dadurch gekennzeichnet, dass** der Kabelkanal (2) aus zwei vorzugsweise identischen Gitterstrukturen (2A, 2B) mit Längsstegen (22A, 22B) und Querstegen (21A, 21B) besteht, wobei die Querstege (21A, 21B) vorzugsweise in der benachbarten Gitterstruktur (2B bzw. 2A) verankerbar bzw. verankert sind.

14. Kabelführungsvorrichtung (3) nach einem der Ansprüche 1-13, **dadurch gekennzeichnet, dass** die Haltevorrichtung (11) wenigstens eine dem Halten des Kabelkanals (2) dienende Hakenreihe (111) und/oder wenigstens einen Ausleger (112) aufweist, auf den der Kabelkanal (2) aufsetzbar ist.

15. Kabelführungsvorrichtung (3) nach Anspruch 14, **dadurch gekennzeichnet, dass** die Haltevorrichtung (11) zumindest teilweise innerhalb des Kabelkanals (2) angeordnet ist und/oder dass die Haltevorrichtung (11) vorzugsweise durch Haken (111) zumindest mit einer der beiden Kanalwände (26, 28) verbunden ist.

## Claims

1. Cable guide device (3) with functional integrity in case of fire with a cable channel (2) that comprises a channel bottom (27) and channel walls (26, 28) that are adjoining it on both sides, which delimit a channel opening (20) provided for receiving media lines, particularly cable (81), and with at least one fastening device (1) that is provided with a segment anchor (13) and that serves for mounting the cable channel (2) an a building ceiling (9), **characterised in that** the segment anchor (13) is connected with a holding device (11), which serves for holding the cable channel (2), and a mechanical cover element (12) is held by the fastening device (1), particularly the segment anchor (13), above and separated from the cable channel (2), with which at least the cable inserted in den cable channel (2) are protected against the impact of concrete parts, which in case of fire get loose from the building ceiling (9).

2. Cable guide device (3) with functional integrity in case of fire with a cable channel (2) that comprises a channel bottom (27) and channel walls (26, 28) that are adjoining it on both sides, which delimit a channel opening (20) provided for receiving media lines, particularly cable (81), and with at least one fastening device (1) that is provided with a segment anchor (13) and that serves for mounting the cable channel (2) an a building ceiling (9), **characterised in that** the segment anchor (13) is connected with a holding device (11), which serves for holding the cable channel (2), and that an insulating thermal cover element (120) is held by the fastening device (1), particularly the segment anchor (13), above and separated from the cable channel (2), with which in case of fire the impact of heat onto the building ceiling is reduced and the loosening of concrete parts is counteracted.

3. Cable guide device (3) with functional integrity in case of fire with a cable channel (2) that comprises a channel bottom (27) and channel walls (26, 28) that are adjoining it on both sides, which delimit a channel opening (20) provided for receiving media lines, particularly cable (81), and with at least one fastening device (1) that is provided with a segment anchor (13) and that serves for mounting the cable channel (2) an a building ceiling (9),, **characterised in that** the segment anchor (13) is connected with a holding device (11), which serves for holding the cable channel (2), and a mechanical cover element (12) is held by the fastening device (1), particularly the segment anchor (13), above and separated from the cable channel (2), with which at least the cable inserted in den cable channel (2) are protected against the impact of concrete parts, which in case of fire get loose from the building ceiling (9), and that an insulating thermal cover element (120) is held by the fastening device (1), particularly the segment anchor (13), above and separated from the cable channel (2), with which in case of fire the impact of heat onto the building ceiling is reduced and the loosening of concrete parts is counteracted.

4. Cable guide device (3) according to claim 1 or 3, **characterised in that** the mechanical cover element (12) is a metal strip that preferably is formed from sheet metal and that comprises deformations, such as angled or curved side ends 122, or embossed crimps (1211), which extend in parallel and/or inclined to the longitudinal axis (x) of the cable channel (2).

5. Cable guide device (3) according to claim 1 or 3, **characterised in that** the mechanical cover element (12) (120) is held by means of the segment anchor (13) and preferably at least one nut (131) provided thereon spaced from the concrete ceiling (9) or adjoining thereto.

6. Cable guide device (3) according to claim 2 or 3, **characterised in that** the thermal cover element (120) is held by means of the segment anchor (13) and preferably at least one nut (131) provided thereon spaced from the concrete ceiling (9) or adjoining thereto.

7. Cable guide device (3) according to claim 2 or 3, **characterised in that** the optionally plate shaped thermal cover element (120) is made of fire-resistant and fire-retardant material, such as a flame-retardant thermoplastic moulding compound and or a flame-resistant laminate, that are connected, optionally glued, to the building ceiling (9).

8. Cable guide device (3) according to one of the claims 1 - 7, **characterised in that** the cable channel is a mesh pathway provided with longitudinal bars and transverse bars, a cableway formed from sheet metal or a cable ladder, whose channel walls (26, 28) are connected with one another by rod-shaped traverses, which form the channel bottom (27).

9. Cable guide device (3) according to claim 1 or 3, **characterised in that** the mechanical cover element (12) and/or at least one part of the cable channel (2), such as shaped sheet metal, grid bars and/or profile elements, are made of refractory and corrosion-resistant material, such as steel or a metal alloy, preferably an alloy of iron, chromium and nickel, which preferably meets one of the quality standards DIN 17750 or EN 10302.

10. Cable guide device (3) according to claim 1 or 3, **characterised in that** the mechanical cover element (12), which preferably adjoins the building ceiling (9), forms an emergency channel that serves for receiving and holding emergency lines (82).

11. Cable guide device (3) according to claim 2 or 3, **characterised in that** the thermal cover element (120), which preferably adjoins the building ceiling (9), forms an emergency channel that serves for receiving and holding emergency lines (82).

12. Cable guide device (3) according to claim 2 or 3, **characterised in that** the thermal cover element (120) is designed as a plate or laminate having recesses for receiving the emergency lines (82).

13. Cable guide device (3) according to one of the claims 1 - 12, **characterised in that** the cable channel (2) consists of two preferably identical grid structures (2A, 2B) with longitudinal bars (22A, 22B) and transverse bars (21A, 21B), wherein the transverse webs (21A, 21B) are preferably anchored or anchorable in the adjacent grid structure (2B or 2A) .

14. Cable guide device (3) according to one of the claims 1-13, **characterised in that** the holding device (11) comprises at least one hook row (111) for holding the cable channel (2) and/or at least one cantilever (112), on which the cable channel (2) can be seated.

15. Cable guide device (3) according to claim 14, **characterised in that** the holding device (11) is arranged at least partially within the cable channel (2) and/or that the holding device (11) is connected preferably by hooks (111) at least with one of the two channel walls (26, 28).

## Revendications

1. Dispositif de guidage de câble (3) avec intégrité fonctionnelle en cas d'incendie avec un canal de câble (2), qui présente un fond de canal (27) et adjacent des deux côtés des parois de canal (26, 28), qui délimitent une ouverture du canal (20), destinée à recevoir des conduits, en particulier des câbles (81), et avec au moins un dispositif de fixation (1), qui sert au montage du canal de câble (2) sur un plafond (9), muni d'un ancrage de segment (13), **caractérisé en ce que** l'ancrage de segment (13) est connecté à un dispositif de support (11), qui sert à tenir le canal de câble (2), et que le dispositif de fixation (1), en particulier l'ancrage de segment (14), tient un élément de recouvrement mécanique (12) au-dessus et séparé du canal de câble (2), par lequel au moins les câbles posés dans le canal de câble (2) sont protégés contre l'influence des pièces en béton, qui se détachent du plafond (9) en cas d'incendie.

2. Dispositif de guidage de câble (3) avec intégrité fonctionnelle en cas d'incendie avec un canal de câble (2), qui présente un fond de canal (27) et adjacent des deux côtés des parois de canal (26, 28), qui délimitent une ouverture du canal (20), destinée à recevoir des conduits, en particulier des câbles (81), et avec au moins un dispositif de fixation (1), qui sert au montage du canal de câble (2) sur un plafond (9), muni d'un ancrage de segment (13), **caractérisé en ce que** l'ancrage de segment (13) est connecté à un dispositif de support, qui sert à tenir le canal de câble (2), et que le dispositif de fixation (1), en particulier l'ancrage de segment (14), tient un élément de recouvrement thermique (120) au-dessus et séparé du canal de câble (2), par lequel en cas d'incendie l'influence de la chaleur sur le plafond est réduite et le détachement de pièces de béton est contré.

3. Dispositif de guidage de câble (3) avec intégrité fonctionnelle en cas d'incendie avec un canal de câble (2), qui présente un fond de canal (27) et adjacent des deux côtés des parois de canal (26, 28), qui délimitent une ouverture du canal (20), destinée à recevoir des conduits, en particulier des câbles (81), et avec au moins un dispositif de fixation (1), qui sert au montage du canal de câble (2) sur un plafond (9), muni d'un ancrage de segment (13), **caractérisé en ce que** l'ancrage de segment (13) est connecté à un dispositif de support, qui sert à tenir le canal de câble (2), et que le dispositif de fixation (1), en particulier l'ancrage de segment (14), tient un élément de recouvrement mécanique (12) au-dessus et séparé du canal de câble (2), par lequel au moins les câbles posés dans le canal de câble (2) sont protégés contre l'influence des pièces en béton, qui se détachent du plafond (9) en cas d'incendie, et que le dispositif de fixation (1), en particulier l'ancrage de segment (14), tient un élément de recouvrement thermique (120) au-dessus et séparé du canal de câble (2), par lequel en cas d'incendie l'influence de la chaleur sur le plafond est réduite et le détachement de pièces de béton est contré.

4. Dispositif de guidage de câble (3) selon la revendication 1 ou 3, **caractérisé en ce que** l'élément de recouvrement mécanique (12) est une bande métallique, qui est de préférence formé d'une feuille métallique, et qui présente des déformations, comme des extrémités latérales (122) anglées ou courbées ou des moulures (1211), qui sont parallèles et/ou transversales par rapport à l'axe longitudinal (x) du canal de câble (2).

5. Dispositif de guidage de câble (3) selon la revendication 1 ou 3, **caractérisé en ce que** l'élément de recouvrement mécanique (12) est tenu par l'ancrage de segment (13) et de préférence par au moins un écrou (131) prévu là-dessus espacé du plafond (9) ou adjacent au plafond (9).

6. Dispositif de guidage de câble (3) selon la revendication 2 ou 3, **caractérisé en ce que** l'élément de recouvrement thermique (120) est tenu par l'ancrage de segment (13) et de préférence par au moins un écrou (131) prévu là-dessus espacé du plafond (9) ou adjacent au plafond (9)

7. Dispositif de guidage de câble (3) selon la revendication 2 ou 3, **caractérisé en ce que** l'élément de recouvrement thermique (120), qui est éventuellement conçu en forme de plaque, est formé d'un matériau résistant au feu et ignifugeant, comme une masse thermoplastique ignifuge et/ou d'un stratifié résistant au feu, qui est connecté et éventuellement collé au plafond (9).

8. Dispositif de guidage de câble (3) selon une des revendications 1 - 7, **caractérisé en ce que** le canal de câble est un chemin de câble muni de rails longitudinaux et transversaux, un chemin de câbles en tôle moulée ou un support de câbles dont les parois (26,28) sont reliées entre elles par des traverses, qui forment le fond de canal (27).

9. Dispositif de guidage de câble (3) selon la revendication 1 ou 3, **caractérisé en ce que** l'élément de recouvrement mécanique (12) et/ou au moins une partie du canal de câble (2), comme de la feuille métallique formée, des tiges de grille et/ou des éléments de profil, sont formées de matériel résistant au feu et à la corrosion, comme de l'acier ou d'un alliage métallique, de préférence un alliage de fer, chrome ou nickel, qui remplit de préférence un des standards de qualité selon la DIN 17750 ou EN 10302.

10. Dispositif de guidage de câble (3) selon la revendication 1 ou 3, **caractérisé en ce que** l'élément de recouvrement mécanique (12), qui s'appuie de préférence contre le plafond (9), forme un canal d'urgence, qui sert à recevoir et tenir des conduits de secours (82).

11. Dispositif de guidage de câble (3) selon la revendication 2 ou 3, **caractérisé en ce que** l'élément de recouvrement thermique (120), qui s'appuie de préférence contre le plafond (9), forme un canal d'urgence, qui sert à recevoir et tenir des conduits de secours (82).

12. Dispositif de guidage de câble (3) selon la revendication 2 ou 3, **caractérisé en ce que** l'élément de recouvrement thermique (120) est conçu en forme de plaque ou stratifié, qui présente des cavités destinées à recevoir les conduits de secours (82).

13. Dispositif de guidage de câble (3) selon une des revendications 1 - 12, **caractérisé en ce que** le canal de câble (2) consiste de deux structures à grilles (2A, 2B) de préférence identique avec des tiges longitudinales (22A, 22B) et des tiges transversales (21A, 21B), les tiges transversales (21A, 21B) étant de préférence ancrés ou pouvant être ancrés dans les tiges longitudinales (2B resp. 2A) voisines.

14. Dispositif de guidage de câble (3) selon une des revendications 1-13, **caractérisé en ce que** le dispositif de support (11) présente au moins une rangé de crochets (111) destiné à tenir le canal de câble (2) et/ou présente au moins une poutre (112), sur laquelle le canal de câble (2) peut être posé.

15. Dispositif de guidage de câble (3) selon la revendication 14, **caractérisé en ce que** le dispositif de support (11) est arrangé au moins partiellement à l'intérieur du canal de câble (2) et/ou que le dispositif de support (11) est connecté à au moins une paroi du canal (26, 28) de préférence par des crochets (111).
